# FASCICULE DE BREVET EUROPEEN

(11) **EP 2 517 871 B1**
(45) Date de publication et mention de la délivrance du brevet: **02.04.2014**
(21) Numéro de dépôt: 12165558.3
(22) Date de dépôt: 25.04.2012
(51) Int. Cl.: B32B 5/18, B32B 15/08, B32B 15/20, B32B 27/40, B60R 13/08, B32B 15/14, B32B 15/04, B29C 51/14, B60R 21/34

(54) **Procede de realisation d'un ecran de masquage**
Verfahren zur Realisierung eines Maskierbildschirms
Method for producing a masking panel

(30) Priorité: 29.04.2011 FR 1153696
(43) Date de publication de la demande: 31.10.2012
(73) Titulaire: CENTRE D'ETUDE ET DE RECHERCHE POUR L'AUTOMOBILE (CERA), 51100 Reims (FR)
(72) Inventeur: Lecomte, Alicia, 51220 Villers-Franqueux (FR); Waxin, Laurent, 02130 Dravegny (FR)
(74) Mandataire: Sayettat, Julien Christian

(56) Documents cités:
- WO-A1-03/011586
- US-A- 4 508 774

## Description

L'invention concerne un procédé de réalisation d'un écran de masquage destiné à être posé contre un moteur de véhicule automobile, un écran réalisé par un tel procédé et une architecture de recouvrement d'un moteur par un tel écran.

Un écran de masquage a plus particulièrement une fonction esthétique qui est de masquer le moteur à la vue de l'utilisateur. Il est connu de réaliser un écran de masquage destiné à être posé au dessus d'un moteur de véhicule automobile, ledit écran étant réalisé à base de matériau plastique injecté.

Par ailleurs, les constructeurs automobiles cherchent à réaliser des moteurs aussi compacts que possible, la contrepartie étant une température de moteur accrue au niveau de l'écran, pouvant atteindre notamment 175°C.

Pour éviter d'avoir à utiliser des matières plastiques de haute résistance à la température, donc onéreuses, on monte l'écran à distance du moteur, par exemple à une distance de l'ordre de 20 mm.

Un tel montage requiert notamment de monter l'écran par le biais de plots de matériau élastomère servant à réaliser un découplage vibratoire, la présence de tels plots entraînant une complexification de réalisation et des surcoûts associés.

Pour limiter les blessures en cas de choc d'un piéton contre le capot, il est imposé de ménager une garde de sécurité - par exemple de l'ordre de 50 mm - entre le capot et tout « point dur » situé en dessous, qu'il s'agisse du moteur lui même ou d'un élément disposé entre le capot et le moteur.

Or, un écran tel que décrit ci-dessus, du fait de sa rigidité intrinsèque, constitue un tel « point dur », ce qui oblige à rehausser le capot en conséquence pour disposer de la garde réglementaire entre l'écran et le capot.

Du reste, les écrans à base de matériau plastique injecté présentent un poids important, généralement supérieur à 1 kg.

US 4508774 décrit des panneaux comprenant une feuille de mousse de polyuréthane qui peut avoir sur une ou sur les deux faces un revêtement de renforcement ou décorative.

L'invention a pour but de pallier ces inconvénients en proposant un écran qui réponde simultanément à un certain nombre de fonctions :
- résister à des températures élevées, notamment de l'ordre de 175°C, de manière à pouvoir être posé contre le moteur, ce qui permet de s'affranchir de plots de découplage,
- être suffisamment rigide, pour pouvoir être facilement monté et ne pas être sujet à des vibrations amplifiées par rapport à celles du moteur, tout en présentant une très bonne aptitude à la compression sous faible pression, ceci afin d'éviter d'en faire un « point dur »,
- présenter un faible poids.

A cet effet, et selon un premier aspect, l'invention propose un procédé de réalisation d'un écran de masquage, ledit écran étant destiné à être posé contre un moteur de véhicule automobile, comprenant les opérations suivantes :
- prévoir une couche de mousse de polyuréthanne de masse volumique comprise entre 8 et 15 g/l et de caractéristique de contrainte-déformation relative en compression comprise entre 10 et 25 kPa,
- comprimer à chaud ladite couche dans un moule de manière à obtenir une âme pourvue d'une face supérieure et d'une face inférieure,
- associer contre chacune desdites faces une feuille respective d'aluminium d'épaisseur comprise entre 30 et 130 microns, notamment entre 60 et 80 microns.

Dans cette description, les termes de positionnement dans l'espace (supérieur, inférieur, ...) sont pris en référence à l'écran disposé dans le véhicule.

La caractéristique de contrainte-déformation relative en compression est une mesure de l'aptitude à la compression de la mousse. Elle est définie selon le protocole décrit dans la norme ISO 3386/1, qui prévoit de mesurer la pression à appliquer pour obtenir un enfoncement de 40% de l'épaisseur initiale d'une éprouvette en mousse.

Selon d'autres aspects, l'invention propose un écran obtenu par un tel procédé et une architecture de montage d'un tel écran.

Le procédé proposé permet d'obtenir un écran qui présente une aptitude à être posé sur le moteur sans subir de dégradation liée à la température dudit moteur, ceci en raison de la nature du matériau constitutif de l'âme, le polyuréthanne employé n'étant pas - de par sa nature non thermoplastique - affecté par une température de l'ordre de 175°C.

Le fait que le polyuréthanne une fois comprimé garde sa géométrie est lié à une ruine partielle du matériau lors de sa compression.

Le procédé proposé permet par ailleurs, du fait de l'aptitude à la compression de la couche de mousse utilisée, de réaliser un écran présentant une âme en mousse très aisément compressible, même dans des zones fortement comprimées.

L'âme en mousse est prise en sandwich entre les feuilles d'aluminium qui présentent un module de Young très élevé, ce qui crée un « effet poutre » permettant de bénéficier d'un écran présentant une bonne rigidité.

Les feuilles d'aluminium, du fait de leur finesse, ne forment pas une entrave significative à l'écrasement de l'écran sous faible pression.

L'écran ne forme ainsi pas de « point dur », ce qui évite d'avoir à rehausser le capot pour respecter la garde réglementaire.

On notera par ailleurs que la légèreté des composants constitutifs de l'écran permet d'obtenir une pièce particulièrement légère, par exemple de l'ordre de 150 grammes.

La combinaison de toutes ces caractéristiques permet, par un compromis adéquat, de bénéficier d'un produit qui réponde aux attentes de cahier des charges des constructeurs automobiles.

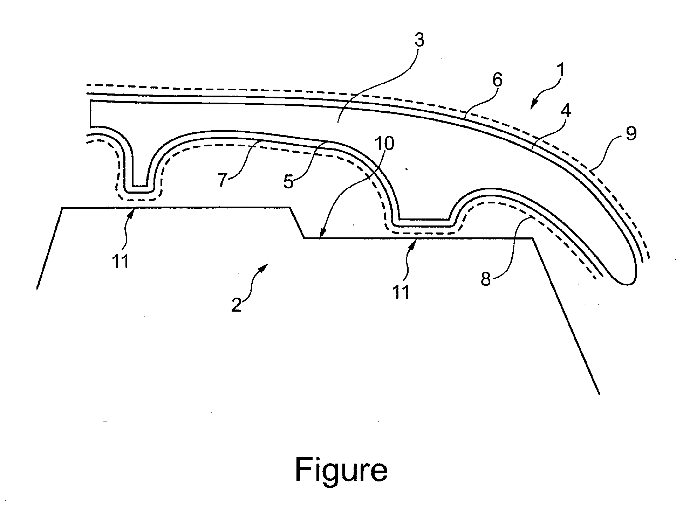

D'autres particularités et avantages de l'invention apparaîtront dans la description qui suit, faite en référence à la figure jointe qui est une représentation schématique en coupe d'une architecture selon une réalisation.

En référence à la figure, on décrit un procédé de réalisation d'un écran 1 de masquage, ledit écran étant destiné à être posé contre un moteur 2 de véhicule automobile, comprenant les opérations suivantes :
- prévoir une couche de mousse de polyuréthanne, notamment de type
   « semi rigide », de masse volumique comprise entre 8 et 15 g/l et de caractéristique de contrainte-déformation relative en compression comprise entre 10 et 25 kPa,
- comprimer à chaud - par exemple à température de l'ordre de 200°C - ladite couche dans un moule de manière à obtenir une âme 3 pourvue d'une face supérieure 4 et d'une face inférieure 5,
- associer contre chacune desdites faces une feuille 6,7 respective d'aluminium d'épaisseur comprise entre 30 et 130 microns, notamment entre 60 et 80 microns.

Selon une réalisation, les feuilles 6,7 d'aluminium sont associées lors de la phase de compression de la couche de mousse, lesdites feuilles ayant été préalablement enduites de colle activable à chaud, notamment de type phénolique.

Le procédé de réalisation de l'écran 1 représenté comprend en outre une opération d'association, sur la feuille 7 d'aluminium de la face inférieure 5, d'une couche de protection 8 contre l'abrasion, notamment à base de non tissé de masse surfacique comprise entre 50 et 100 g/m², ladite couche présentant une résistance au passage de l'air comprise entre 10 et 250 N.s.m⁻³.

L'intérêt d'une telle couche 8 est de permettre une protection du moteur ou d'organes périphériques, tels que des tuyaux ou des câbles, vis à vis du pouvoir abrasif de la feuille 7 d'aluminium.

Le fait de prévoir une couche de protection 8 poreuse permet une réflexion de la chaleur par la feuille 7 d'aluminium.

L'association de la couche de protection 8 est notamment réalisée pendant la compression de la couche de mousse par l'intermédiaire d'une colle activable à chaud, notamment de type phénolique.

Le procédé de réalisation de l'écran 1 représenté comprend en outre une opération d'association, sur la feuille d'aluminium 6 de la face supérieure 4, d'une couche de revêtement 9, notamment à base de non tissé de masse surfacique comprise entre 50 et 100 g/m².

De même que précédemment, l'association de la couche de revêtement 9 est notamment réalisée pendant la compression de la couche de mousse par l'intermédiaire d'une colle activable à chaud, notamment de type phénolique.

On notera que les couches 8,9 peuvent être traitées pour la tenue aux fluides moteurs et la résistance au feu.

On décrit à présent un écran 1 de masquage destiné à être posé contre un moteur 2 de véhicule automobile, ledit écran comprenant :
- une âme 3 en mousse de polyuréthanne pourvue d'une face supérieure 4 et d'une face inférieure 5,
- deux feuilles d'aluminium 6,7 d'épaisseur comprise entre 30 et 130 microns, notamment entre 60 et 80 microns, lesdites feuilles étant respectivement associées contre chacune desdites faces.

Selon la réalisation représentée, l'écran 1 comprend en outre une couche de protection 8 contre l'abrasion disposée sur la feuille d'aluminium 7 de la face inférieure 5, ladite couche étant notamment à base de non tissé de masse surfacique comprise entre 50 et 100 g/m², ladite couche présentant une résistance au passage de l'air comprise entre 10 et 250 N.s.m⁻³.

Selon la réalisation représentée, l'écran 1 comprend en outre une couche de revêtement 9 disposée sur la feuille d'aluminium 6 de la face supérieure 4, ladite couche étant notamment à base de non tissé de masse surfacique comprise entre 50 et 100 g/m².

Selon une réalisation, l'âme 3 présente une épaisseur variable comprise entre 5 et 30 mm, les zones les plus fines remplissant notamment une fonction de rigidification complémentaire.

On décrit enfin une architecture de recouvrement d'un moteur 2, ladite architecture comprenant un écran 1 et une surface supérieure 10 dudit moteur, ledit écran étant posé sur ladite surface selon au moins une zone de piètement 11 formée sous ledit écran.

Une telle réalisation permet de s'affranchir de plots de découplage.

L'architecture peut comprendre en outre au moins un moyen de fixation de l'écran 1 au moteur 2, par exemple sous forme d'un pion, non représenté, solidarisé audit moteur par emboitement.

## Revendications

1. Procédé de réalisation d'un écran (1) de masquage, ledit écran étant destiné à être posé contre un moteur (2) de véhicule automobile, comprenant les opérations suivantes :
• prévoir une couche de mousse de polyuréthanne de masse volumique comprise entre 8 et 15 g/l et de caractéristique de contrainte-déformation relative en compression comprise entre 10 et 25 kPa,
• comprimer à chaud ladite couche dans un moule de manière à obtenir une âme (3) pourvue d'une face supérieure (4) et d'une face inférieure (5),
• associer contre chacune desdites faces une feuille (6,7) respective d'aluminium d'épaisseur comprise entre 30 et 130 microns, notamment entre 60 et 80 microns.

2. Procédé selon la revendication 1, **caractérisé en ce que** les feuilles d'aluminium (6,7) sont associées lors de la phase de compression de la couche de mousse, lesdites feuilles ayant été préalablement enduites de colle activable à chaud.

3. Procédé selon la revendication 1 ou 2, **caractérisé en ce qu'**il comprend en outre une opération d'association, sur la feuille d'aluminium (7) de la face inférieure (5), d'une couche de protection (8) contre l'abrasion, ladite couche présentant une résistance au passage de l'air comprise entre 10 et 250 N.s.m⁻³.

4. Procédé selon l'une quelconque des revendications 1 à 3, **caractérisé en ce qu'**il comprend en outre une opération d'association, sur la feuille d'aluminium (6) de la face supérieure (4), d'une couche de revêtement (9).

5. Ecran (1) de masquage destiné à être posé contre un moteur (2) de véhicule automobile, ledit écran étant fabriqué par un procédé selon l'une quelconque des revendications 1 à 4, ledit écran comprenant :
• une âme (3) en mousse de polyuréthanne pourvue d'une face supérieure (4) et d'une face inférieure (5),
• deux feuilles (6,7) d'aluminium d'épaisseur comprise entre 30 et 130 microns, notamment entre 60 et 80 microns, lesdites feuilles étant respectivement associées contre chacune desdites faces.

6. Ecran selon la revendication 5, **caractérisé en ce qu'**il comprend en outre une couche de protection (8) contre l'abrasion disposée sur la feuille d'aluminium (7) de la face inférieure (5), ladite couche présentant une résistance au passage de l'air comprise entre 10 et 250 N.s.m⁻³.

7. Ecran selon la revendication 5 ou 6, **caractérisé en ce qu'**il comprend en outre une couche de revêtement (9) disposée sur la feuille d'aluminium (6) de la face supérieure (4).

8. Ecran selon l'une quelconque des revendications 5 à 7, **caractérisé en ce que** l'âme (3) présente une épaisseur variable comprise entre 5 et 30 mm.

9. Architecture de recouvrement d'un moteur, ladite architecture comprenant un écran selon l'une quelconque des revendications 5 à 7 et une surface supérieure (10) dudit moteur, ledit écran étant posé sur ladite surface selon au moins une zone de piètement (11).

10. Architecture selon la revendication 9, **caractérisée en ce qu'**elle comprend en outre au moins un moyen de fixation de l'écran (1) au moteur (2).

## Patentansprüche

1. Verfahren zur Herstellung eines Maskierbildschirms (1), wobei der Bildschirm dazu ausgelegt ist, um gegen einen Kraftfahrzeugmotor (2) gestellt zu werden, umfassend die folgenden Vorgänge:
- Bereitstellen einer Schicht aus Polyurethanschaum mit einer Schüttdichte zwischen 8 und 15 g/l und mit einer Spannungs-/Verformungs-Eigenschaft mit Bezug auf die Kompression zwischen 10 und 25 kPa,
- Heißkomprimieren der Schicht in einer Form, um einen Kern (3) zu erhalten, der mit einer oberen Seite (4) und einer unteren Seite (5) versehen ist.
- Assoziieren gegen jede der Seiten einer entsprechenden Folie (6, 7) aus Aluminium mit einer Dicke zwischen 30 und 130 Mikrometer, insbesondere zwischen 60 und 80 Mikrometer.

2. Verfahren nach Anspruch 1, **dadurch gekennzeichnet, dass** die Aluminiumfolien (6, 7) bei der Phase des Komprimierens der Schaumschicht assoziiert werden, wobei die Folien zuvor mit Klebstoff beschichtet wurden, die bei Hitze aktiviert werden kann.

3. Verfahren nach Anspruch 1 oder 2, **dadurch gekennzeichnet, dass** es außerdem einen Vorgang des Assoziierens, auf die Aluminiumfolie (7), der unteren Seite (5) einer Schutzschicht (8) gegen den Abrieb umfasst, wobei die Schicht einen Widerstand gegen den Luftdurchfluss zwischen 10 und 250 N.s.m⁻³ umfasst.

4. Verfahren nach einem der Ansprüche 1 bis 3, **dadurch gekennzeichnet, dass** es außerdem einen Vorgang des Assoziierens, auf der Aluminiumfolie (6) der oberen Seite (4), einer Beschichtung (9) umfasst.

5. Maskierbildschirm (1), der dazu ausgelegt ist, um gegen einen Kraftfahrzeugmotor (2) gestellt zu werden, wobei der Bildschirm durch ein Verfahren nach einem der Ansprüche 1 bis 4 hergestellt wird, wobei der Bildschirm Folgendes umfasst:
- einen Kern (3) aus Polyurethanschaum, der mit einer oberen Seite (4) und einer unteren Seite (5) versehen ist,
- zwei Aluminiumfolien (6, 7) mit einer Dicke zwischen 30 und 130 Mikrometer, insbesondere zwischen 60 und 80 Mikrometer, wobei die Folien jeweils gegen jede der Seiten assoziiert sind.

6. Bildschirm nach Anspruch 5, **dadurch gekennzeichnet, dass** er außerdem eine Schutzschicht (8) gegen den Abrieb umfasst, die auf der Aluminiumfolie (7) der unteren Seite (5) angebracht ist, wobei die Schicht einen Widerstand gegen den Luftdurchfluss zwischen 10 und 250 N.s.m⁻³ umfasst.

7. Bildschirm nach Anspruch 5 oder 6, **dadurch gekennzeichnet, dass** er außerdem eine Beschichtung (9) umfasst, die auf der Aluminiumfolie (6) der oberen Seite (4) angebracht ist.

8. Bildschirm nach einem der Ansprüche 5 bis 7, **dadurch gekennzeichnet, dass** der Kern (3) eine variable Dicke aufweist, die zwischen 5 und 30 mm liegt.

9. Beschichtungsarchitektur eines Motors, wobei die Architektur einen Bildschirm nach einem der Ansprüche 5 bis 7 und eine obere Fläche (10) des Motors umfasst, wobei der Bildschirm auf die Oberfläche gemäß mindestens einem Fundamentbereich (11) gestellt ist.

10. Architektur nach Anspruch 9, **dadurch gekennzeichnet, dass** sie außerdem mindestens ein Mittel zur Befestigung des Bildschirms (1) an den Motor (2) umfasst.

## Claims

1. Method for producing a masking screen (1), said screen being intended to be positioned against a motor vehicle engine (2), comprising the following operations:
- providing a layer of polyurethane foam having a density between 8 and 15 g/l and a relative stress-strain feature in compression between 10 and 25 kPa,
- hot-compressing said layer in a mould so as to obtain a core (3) provided with a top face (4) and a bottom face (5),
- associating against each of said faces a respective sheet (6, 7) of aluminium between 30 and 130 microns, notably between 60 and 80 microns, in thickness.

2. Method according to claim 1, **characterised in that** the sheets of aluminium (6, 7) are associated during the compression phase of the foam layer, said sheets having been previously coated with heat-activated adhesive.

3. Method according to claim 1 or 2, **characterised in that** it further comprises an operation for associating, on the sheet of aluminium (7) of the bottom face (5), a protective layer (8) against abrasion, said layer having an air flow resistance between 10 and 250 N.s.m⁻³.

4. Method according to any of claims 1 to 3, **characterised in that** it further comprises an operation for associating, on the sheet of aluminium (6) of the top face (4), a surface layer (9).

5. Masking screen (1) intended to be positioned against a motor vehicle engine (2), said screen being manufactured by means of a method according to any of claims 1 to 4, said screen comprising:
- a core (3) made of polyurethane foam provided with a top face (4) and a bottom face (5),
- two sheets (6, 7) of aluminium between 30 and 130 microns, notably between 60 and 80 microns, in thickness, said sheets being respectively associated against each of said faces.

6. Screen according to claim 5, **characterised in that** it further comprises a protective layer (8) arranged on the sheet of aluminium (7) of the bottom face (5), said layer having an air flow resistance between 10 and 250 N.s.m⁻³.

7. Screen according to claim 5 or 6, **characterised in that** it further comprises a surface layer (9) arranged on the sheet of aluminium (6) of the top face (4).

8. Screen according to any of claims 5 to 7, **characterised in that** the core (3) has a variable thickness between 5 and 30 mm.

9. Structure for covering an engine, said structure comprising a screen according to any of claims 5 to 7 and a top surface (10) of said engine, said screen being positioned on said surface according to at least one base area (11).

10. Structure according to claim 9, **characterised in that** it further comprises at least one means for attaching the screen (1) to the engine (2).
